# EUROPEAN PATENT SPECIFICATION

(11) **EP 2 720 192 B1**
(45) Date of publication and mention of the grant of the patent: **08.04.2015**
(21) Application number: 12462013.9
(22) Date of filing: 12.10.2012
(51) Int. Cl.: G06T 7/00

(54) **Method, system and computer readable medium for liver diagnosis**
Verfahren, System und computerlesbares Medium zur Leberdiagnose
Procédé, système et support lisible par ordinateur pour un diagnostic du foie

(43) Date of publication of application: 16.04.2014
(73) Proprietor: General Electric Company, Schenectady, New York 12345 (US)
(72) Inventor: Rusko, Laszlo, 6722 Szeged (HU); Váradi, Zoltán, 6722 Szeged (HU)
(74) Representative: Kereszty, Marcell

(56) References cited:
- WO-A2-2007/002562
- US-A1- 2004 081 342
- E-LIANG CHEN ET AL: "An Automatic Diagnostic System for CT Liver Image Classification", IEEE TRANSACTIONS ON BIOMEDICAL ENGINEERING, IEEE SERVICE CENTER, PISCATAWAY, NJ, USA, vol. 45, no. 6, June 1998 (1998-06), XP011006550, ISSN: 0018-9294
- X-Z LIN ET AL: "A Noninvasive Alternative to Determine Liver Disease", IEEE ENGINEERING IN MEDICINE AND BIOLOGY MAGAZINE, IEEE SERVICE CENTER, PISACATAWAY, NJ, US, vol. 15, no. 6, November 1996 (1996-11), pages 93-101, XP011084752, ISSN: 0739-5175

## Description

### FIELD OF THE INVENTION

The subject matter disclosed herein relates to a method, a system and a computer readable medium for liver diagnosis, e.g. automatic liver tumor quantification. In a broader sense, the disclosed subject matter relates to image processing of medical images.

### BACKGROUND OF THE INVENTION

Detection of anatomical structures in medical images is a fundamental task in a number of clinical processes in the field of oncology, radiology and in planning surgical interventions. Exemplary techniques for imaging include conventional X-ray plane film radiography, computed tomography ("CT") imaging, magnetic resonance imaging ("MRI"), and nuclear medicine imaging techniques, such as positron emission tomography ("PET") and single photon emission computed tomography ("SPECT"). Detection is a prerequisite for measuring the size and shape of anatomical structures and to plan medical interventions. The spectrum of available detection/segmentation approaches is broad, ranging from manual outlining of structures in 2D cross-sections to more developed methods that use a so called 'registration' to find optimal correspondences between 3D images and a labeled probability map or atlas. There are also known semiautomatic approaches that combine the efficiency and repeatability of automatic segmentation with the human judgment that can only come from skilled expertise.

Detection of tumors within the liver is very important for oncologic diagnosis and therapy monitoring. In clinical practice, usually 3D imaging modalities (CT, MR) are used for this purpose. In many cases the number, size, shape, density distribution of tumors varies significantly, which makes this process very time consuming when carried out manually. There is a need to fasten this process making it suitable for the everyday clinical practice.

Quantification of all tumors in the liver using 3D medical images is also an important problem of clinical oncology. Based on its results, the best therapy can be selected, and the efficiency of the therapy can be monitored. The analysis of liver tumors is important for various cancer types because most of them (pulmonary, breast, colorectal) can develop liver metastases. Frequently, metastatic disease presents as a distribution of small lesions (2-10 mm) throughout the anatomy of the body. Tumor quantification requires precise tumor contours. The segmentation of all liver tumors is very challenging because the liver can involve multiple tumors (metastases as well as primers), which vary significantly in size, shape, density distribution. In many cases the liver contains so many tumors that makes it impossible (or very time consuming) to contour those manually. Even in an average clinical case, the liver contains tumors having irregular shape or ambiguous boundary, which introduces significant inter-operator differences in tumor quantification. In addition to the quantification of each tumor, the total tumor burden (total mass or volume of tumor tissue) of the liver is very important information for physician. The latter can be computed precisely if all tumors are precisely contoured; experienced physicians may estimate it based on visual assessment. Thus, there is a special need for a clinical application that automatically detects, segments and quantifies all (or as much as possible) tumors in the liver for diagnosis purposes.

Liver tumor segmentation involves labeling all the voxels that belong to a target liver tumor e.g. in a 3D liver CT image. The objectives in liver tumor segmentation include accurately locating the liver tumor regions in a 3D liver CT image and producing consistent segmentation results that are robust to user interactions. It is not an easy task to precisely segment the liver tumor from the liver anatomy, except possibly in cases when the liver tumor is well isolated from adjacent anatomical structures.

Usually a large number of liver tumors reside next to anatomical structures with similar intensity distribution in CT images, which may result in boundary blurriness between the liver tumors and the neighboring anatomy structures. The magnitude of gradient at the boundary points becomes much less prominent than that of the intensity variations within a liver tumor. It is very difficult to establish a criterion to identify the precise location of liver tumor boundary when such blurriness exists. Given that there are large variations in the intensity characteristics in liver CT images, in neighboring anatomical structures, and in intra-tumor intensity distribution, it is not easy to design a liver segmentation algorithm that produces a segmentation result that is robust to user interactions. Various liver segmentation algorithms have been proposed, some of which may perform reasonably well on liver CT images in cases when the liver is well-separated from neighboring anatomical structures and without significant boundary liver tumors. When livers are not well-separated from neighboring anatomical structures and/or there exist boundary tumors, extensive user interactions are needed.

To date, physicians rely significantly on the apparent anatomical sizes and shapes of the tumors under treatment when assessing the patients response to a chosen therapy. This can be problematic in patients with "bulky disease" (meaning that the tumor burden is an overestimate of the actual presence of cancer cells) if the cancer remises, but the relative size of the tissue mass does not change. The physician may desire to measure the size of the lesion(s) before and after subsequent treatments to quantify the response. In the case of multiple lesions and metastatic disease, there may be hundreds of small lesions distributed within the liver. Additionally, physicians may choose to use the total tumor burden as an indicator. When the tumors respond to a chosen treatment plan, the total tumor burden will change.

As a general prior art, the following documents are referred to.

US 4,856,528 discloses a method allowing the user segmenting a tumorous tissue slice-by-slice, and allowing the propagation of contour between slices. The method contains liver contour determination, and applies histogram based segmentation. US 7,729,537 B2 discloses a semi-automated framework for tumor segmentation incorporating multiple user defined seed points and traces. US 2008/0044080 A1 discloses an image processing method, an apparatus, and a program for a generic framework for segmentation presented on liver tumor, incorporating machine learning technique based on user defined seed. US 2009/0310883 A1 discloses an image processing apparatus, a method, and a program to detect and segment liver tumors on a follow-up image based on segmented tumor on a reference case. US 2011/0054295 A1 discloses a medical image diagnostic apparatus and a method relating to perfusion-based liver tissue and tumor analysis incorporating segmental structure of the liver.

WO 2007/002562 A2 describes an interactive liver segmentation method for identifying lesions and hepatic vascular structures. The displayed intermediate segmentation results can be interactively refined by the user.

The following patent documents disclose clinical workflows for tumor detection, segmentation, quantification, and follow-up.

US 2006/0079743 A1 discloses a method and an apparatus to facilitate visualization of anatomical shapes. This known method uses various shape filters for automated detection and segmentation of lung tumors. US 2007/0064982 A1 discloses a clinical review and analysis workflow for lung nodule assessment, comprising an improved user interface. EP 2 120 208 A1 discloses a method and a system for lesion segmentation. The document teaches a complete framework including liver and tumor segmentation, geometric and radiometric analysis of tumors, review and visualization of findings. US 7,308,126 B2 discloses a method for using computer-aided detection system outputs in clinical practice. The document teaches a detailed workflow for breast lesion detection with adjustable sensitivity, classification, and segmentation. US 2007/0211930 A1 discloses attribute based image enhancement and a display for medical imaging applications. In the known system, the image is enhanced based on the detection results for automated detection of breast lesions.

There are some patent documents disclosing methods and systems specifically usable for liver tumor detection and diagnosis.

US 2006/0064396 A1 discloses a liver disease diagnosis system, a method and a graphical user interface. A detailed workflow is described for liver lesion analysis having the option of simultaneous execution of manual and automated tumor segmentation. US 2007/0055455 A1 teaches methods for interactive liver disease diagnosis. Again, a detailed workflow for liver lesion analysis and surgical planning is described, paying attention to correct false negative findings and to liver vessels. US 7,702,153 B2 discloses systems and methods for segmenting objects of interest from a medical image. The method defines and segments both foreground (tumor) and background (liver) tissues based on intensity statistics. US 2006/0242146 A1 discloses methods and systems for monitoring tumor burden.

These known systems and methods do not solve the problem of optimally combining automatic and user-interactive steps for liver disease diagnosis, e.g. for liver tumor quantification.

Thus, there is a need for a solution allowing an improvement over existing methods and systems. There is a need for a liver diagnosis method, computer program and system eliminating as much as possible the shortcomings of known techniques. There is a particular need for a liver diagnosis method allowing an optimal combination of automated and interactive steps, and final validation of the results. There is also a need for a method that eliminates the concerns about insufficient reliability of automated detection.

### SUMMARY OF THE INVENTION

In an exemplary embodiment, a method is provided for liver diagnosis, the method comprising the steps of
- determining statistical properties of abnormal tissue in a medical image;
- detecting tumors in the medical image on the basis of the determined statistical properties of abnormal tissue;
- defining a contour for each detected tumor; and
- displaying findings.
Further,
- prior to displaying findings, visualization parameters are calculated based on statistical properties of normal tissue appearing on the medical image, and an image according to the visualization parameters is displayed for visual assessment, and
- adjusting sensitivity of tumor detection and carrying out again said detecting, defining and displaying on the basis of the adjusted sensitivity if in the displayed findings the amount of tumors appears to be lower or higher than visually assessed.

In another exemplary embodiment, a computer readable medium comprising a computer readable program is provided for liver diagnosis, wherein the computer readable program when executed on a computer causes the computer to perform the steps of the above method.

In a further exemplary embodiment, a system is provided for liver diagnosis, the system comprising
- a determining unit configured to determine statistical properties of abnormal tissue in a medical image;
- a detecting unit configured to detect tumors in the medical image on the basis of the determined statistical properties of abnormal tissue;
- a defining unit configured to define a contour for each detected tumor;
- a displaying unit configured to display findings,
- a calculation unit configured to calculate, prior to displaying findings, visualization parameters based on statistical properties of normal tissue appearing on the medical image,
- a further displaying unit configured to display an image according to the visualization parameters for visual assessment, and
- an adjusting unit configured to adjust sensitivity of tumor detection and instruct the system to carry out again said detecting, defining and displaying on the basis of the adjusted sensitivity if in the displayed findings the amount of tumors appears to be lower or higher than visually assessed.

A liver diagnosis method according to the subject matter disclosed herein can decrease the total processing time and enables to establish an efficient clinical workflow, wherein branches of the algorithms can be executed in a parallel manner. The subject matter disclosed herein allows a re-execution of detecting/defining/displaying steps based on a visual assessment in a very efficient way.

### BRIEF DESCRIPTION OF THE DRAWINGS

Characteristics, objectives and advantages of embodiments of the subject matter will become apparent from the following description, which is given solely by way of illustration and is non-limiting, and is to be read with reference to the appended drawing in which

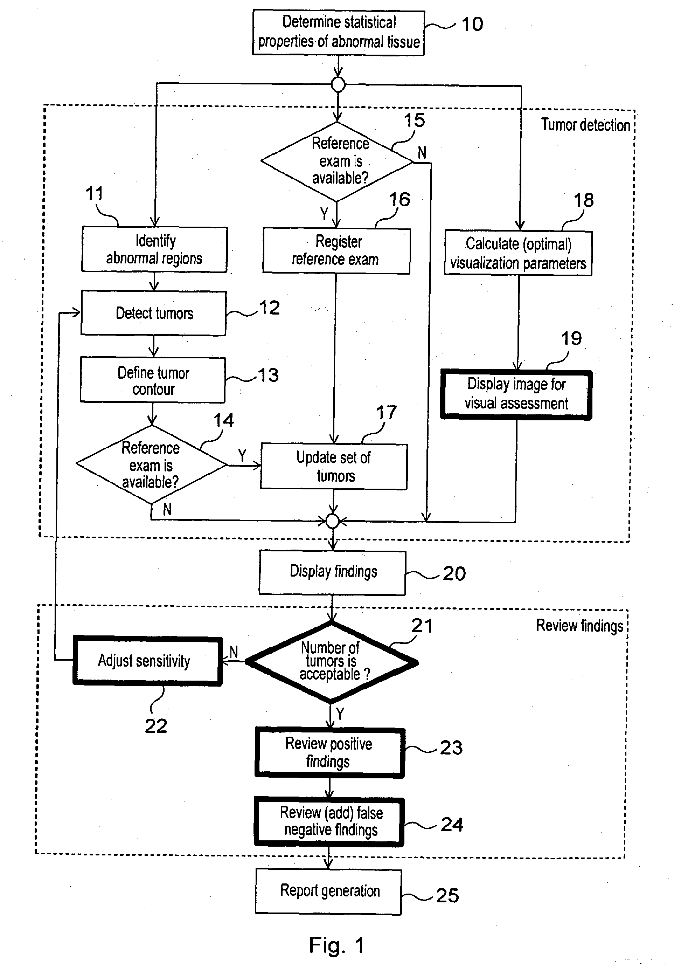

Fig. 1 illustrates a flowchart of a clinical workflow comprising automated and interactive steps.

### DETAILED DESCRIPTION OF THE INVENTION

An embodiment may be embodied in the form of computer-implemented processes and apparatuses for practicing those processes. An embodiment may also be embodied in the form of a computer program code containing instructions embodied in tangible media, such as floppy diskettes, CD-ROMs, DVD-ROMs, hard drives, or any other computer readable storage medium, wherein, when the computer program code is loaded into and executed by a computer, the computer becomes an apparatus for carrying out the method. An embodiment may also be embodied in the form of computer program code, for example, whether stored in a storage medium, loaded into and/or executed by a computer, or transmitted over some transmission medium, such as over electrical wiring or cabling, through fiber optics, or via electromagnetic radiation, wherein when the computer program code is loaded into and executed by a computer, the computer becomes an apparatus for carrying out the method. When implemented on a general-purpose microprocessor, the computer program code segments configure the microprocessor to create specific logic circuits.

Furthermore, an embodiment can take the form of a computer program product accessible from a computer-usable or computer-readable medium providing program code for use by or in connection with a computer or any instruction execution system. For the purposes of this description, a computer-usable or computer readable medium can be any apparatus that may include, store, communicate, propagate, or transport the program for use by or in connection with the instruction execution system, apparatus, or device. The medium can be an electronic, magnetic, optical, electromagnetic, infrared, or semiconductor system (or apparatus or device) or a propagation medium.

Embodiments can take the form of an entirely hardware embodiment, an entirely software embodiment or an embodiment including both hardware and software elements. A preferred embodiment is implemented in software, which includes but is not limited to firmware, resident software, microcode, etc.

The subject matter disclosed herein describes a workflow of diagnosing liver tumors. The disclosure proposes a framework that facilitates liver diagnosis, comprising e.g. detection, segmentation, and quantification steps of all tumors within the liver. A typical user is a clinical radiologist or oncologist, who wants to objectively characterize and measure each tumor and the total the tumor burden of the liver. The framework is based on an automated liver tumor detection and segmentation method. The method is divided into separate branches, which allow building an optimal framework from the user's point of view.

An embodiment of the workflow contains the following steps as depicted in Fig. 1. Rectangles with light frames represent automated functions, while rectangles with heavy frames represent steps involving user interaction/supervising.

The method may use the following mandatory inputs:
- contrast enhanced 3D medical image (e.g. CT, MR);
- segmented volume of interest (VOI - binary mask, where nonzero values represent liver voxels).

The following optional inputs may be used in the method:
- other segmented structures (e.g. vessels, segments, lobes), which can also be incorporated in tumor analysis;
- reference exam that is a prior exam of the same patient processed with the proposed framework.

The method may provide the following outputs:
- an enhanced image, on which the abnormal tissue is more visible (facilitating visual detection of tumor and its boundaries);
- a contour of each detected tumor (for visualization and quantification);
- a summary report comprising various tumor dimensions and/or tumor-characteristic values.

As a first step 10, statistical properties of the abnormal tissue are automatically determined on the basis of the 3D medical image and the VOI. In a preferred embodiment, statistical properties are any suitable mathematical properties being in connection with visual features, properties of the medical image and/or the VOI. The statistical properties can be determined e.g. on the basis of intensity, texture, etc. analysis.

Next, the system starts a background process of a tumor contour defining branch that automatically identifies all abnormal regions in the liver in step 11, separates/detects tumors from other structures based on intensity, morphology, texture, etc. analysis in step 12, and defines and returns a contour for each detected tumor in step 13.

If a reference exam is available, the system starts in step 15 a background process of an optional registering branch that automatically registers the actual exam (set of medical images) with a reference one based on the medical images as well as the VOIs in step 16. In addition, when the defining in step 13 is completed, following step 14, the system automatically updates in step 17 the set of detected tumors comprising true positive (TP), false positive (FP), and false negative (FN) findings stored in the previously processed reference medical image or exam. This updated step can be used to confirm/verify the findings of the contour defining branch.

Preferably simultaneously with steps 11 and 12, the system starts a visual assessment branch, in which visualization parameters (e.g. window size and position, contrast and intensity levels, colors, which allow the best visual separation of normal and abnormal tissues) are calculated in step 18 based on the statistical properties of the normal tissue appearing on the medical image. Again, in a preferred embodiment, statistical properties are any suitable mathematical properties being in connection with visual features, properties of the medical image and/or the VOI, and can be determined e.g. on the basis of intensity, texture, etc. analysis. In a preferred embodiment of the subject matter described herein, additionally to the statistical properties of the normal tissue, statistical properties of the abnormal tissue determined in step 10 can also be taken into account for this calculation. In this way an even more characteristic separation of normal and abnormal tissues can be achieved.

As it is known in the art, the majority of the liver tissue is normal also in the presence of tumors, so there are plenty of normal regions to adjust visualization accordingly. As the input is a contrast enhanced 3D medical image, the characteristic contrast material usually allows the determination (labeling) of normal regions. Optimal visualization parameters differ for each patient (and sometimes for each medical image), so this automated step 18 is to be carried out practically for each medical image.

All the above mentioned steps are preferably automated; now an interactive step 19 follows. In step 19 an image according to the visualization parameters determined in step 18 is displayed in 2D views, so that the user can start a visual assessment of the presence of tumors on the medical image.

According to this embodiment, steps 18 and 19 are carried out before displaying the findings generated in the tumor contour defining and registering branches. In this way, the user will be able to compare a subjective visual assessment with the findings of the automated branches, thereby providing an efficient way to provide feedback to the system and a possibility for the user to re-start tumor contour determination with amended/adjusted sensitivity parameters.

After the background process branches, i.e. steps 11 to 17 are carried out, the user is notified e.g. via a pop-up message window, and the contour of the liver and all positive findings (tumors) are visualized in step 20, e.g. superimposed on 2D views using contours, or in a 3D view using transparent liver.

If no reference image is available, all findings can be visualized using the same color. When reference image is also available, different colors can represent:
- findings of the actual medical image or exam, which can be mapped to the reference medical image or exam (e.g. findings, which allow measuring change);
- findings of the actual medical image or exam, which cannot be mapped to the reference medical image or exam (e.g. new findings);
- findings of the reference medical image or exam, which cannot be mapped to the actual medical image or exam (e.g. vanished findings);
- findings, which are automatically selected for diagnosis, staging, or monitoring.

In a next interactive step 21, the user reviews the number of findings. If the amount (e.g. number, volume) of tumors is appears to be lower or higher than visually assessed in step 19, the user increases or decreases the sensitivity, respectively, of the automated detection in step 22 and the system is instructed to carry out steps 12, 13 and 20, again, with the adjusted sensitivity. Note that the time consuming steps 11 and 16 are skipped, so the system can quickly visualize again the adjusted results in step 20.

After achieving a display of the final findings, appearing to be in line with the image displayed in step 19, the user interactively reviews each positive finding in step 23, and accepts or rejects those. If a finding is accepted, the user reviews its contour and accepts, or corrects it (using manual tool), or completely rejects the contour and re-contours the tumor (using manual or any conceivable contouring tools).

The user can interactively review/bookmark each undetected tumors, i.e. false negative findings using the enhanced image in step 24. For each undetected tumor, the user defines its contour (using manual or any appropriate contouring tool).

Preferably, the system generates a summary table in an automated final step 25, wherein the summary table may contain the following data and information:
- standard 2D and 3D dimensions for each tumor (e.g. volume [relative to liver volume], largest [axial] diameter, distance from liver boundary);
- if additional structures are available, the enclosing segments/lobe, the distance from certain vessel structure for each tumor;
- if reference exam is available the change in all dimensions for each tumor;
- the total tumor volume, relative to the total liver volume (less the vessel volume, in the given case);
- total tumor burden.

The summary table is visualized for the user and saved as part of the exam. In addition all findings (TP, FP, and FN) are saved to enhance processing of follow-up studies.

A technical advantage of the subject matter disclosed herein is that it can be integrated into any clinical software that allows reading 3D medical images and visualizing segmentation results in 2D and 3D views. A technical advantage is that it enables computing characteristic values, e.g. a total tumor burden of the liver without significant workload of the physician.

In summary, the subject matter disclosed herein differs significantly from prior art techniques in the following main points. The subject matter disclosed herein
- involves all important functions (visual enhancement, detection, review of false positives/negatives, segmentation, quantification, follow-up, and reporting) in an optimal order;
- involves/enables computing liver specific tumor metrics (e.g. segment location, distance from vessels, etc.);
- allows simultaneous run of automated algorithms and user interactions;
- allows two ways to correct false negative detections (sensitivity adjustment, manual labeling).

So, an important technical advantage of the subject matter disclosed herein is that it comprises all important functions (related to liver tumor analysis) in optimal order, which allows the user to perform a very complex process in an easy way.

An exemplary embodiment is a computer readable medium comprising a computer readable program for liver disease diagnosis, wherein the computer readable program when executed on a computer causes the computer to perform the steps of the above disclosed method.

Another exemplary embodiment is a system for liver disease diagnosis, the system comprising units configured to perform the steps of the above disclosed method. These units can take the form of an entirely hardware embodiment, an entirely software embodiment or an embodiment including both hardware and software elements.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A method for diagnosing liver, the method comprising the steps of
- determining (10) statistical properties of abnormal tissue in a medical image;
- detecting (12) tumors in the medical image on the basis of the determined statistical properties of abnormal tissue;
- defining (13) a contour for each detected tumor; and
- displaying (20) findings,
**characterized in that**
- prior to displaying (20) findings, visualization parameters are calculated (18) based on statistical properties of normal tissue appearing on the medical image, and an image according to the visualization parameters is displayed (19) for visual assessment, and
- adjusting (22) sensitivity of tumor detection and carrying out again said detecting, defining and displaying (12, 13, 20) on the basis of the adjusted sensitivity if in the displayed findings the amount of tumors appears to be lower or higher than visually assessed.

2. The method according to claim 1, **characterized in that** said visualization parameters are window size, window position, contrast level, intensity level and/or colors.

3. The method according to claim 1 or claim 2, **characterized in that** the determined statistical properties of the abnormal tissue are also taken into account for said calculation (18).

4. The method according to any of claims 1 to 3, **characterized in that** prior to displaying (20) findings, the medical image is registered (16) to a reference medical image, and the result of this registration is used to verify the findings or for determining display parameters, preferably colors of the findings displayed.

5. The method according to claim 4, **characterized in that** after the defining (13) is completed, findings stored in the reference medical image are updated (17).

6. The method according to claim 5, **characterized in that**
- findings of the actual medical image, which can be mapped to the reference medical image;
- findings of the actual medical image, which cannot be mapped to the reference medical image (e.g. new findings);
- findings of the reference medical image, which cannot be mapped to the actual medical image (e.g. vanished findings); and/or
- findings, which are selected for diagnosis, staging, or monitoring are displayed (20) with different colors.

7. The method according to any of claims 1 to 6, **characterized in that** after displaying (20) final findings, an interactive review (23) of positive findings and/or an interactive review (24) of negative findings is carried out.

8. The method according to any of claims 1 to 7, **characterized in that** a report comprising a total tumor burden of the liver is generated.

9. A computer readable medium comprising a computer readable program for diagnosing liver, wherein the computer readable program when executed on a computer causes the computer to perform the steps of the method according to any of claims 1 to 8.

10. A system for diagnosing liver, the system comprising
- a determining unit configured to determine (10) statistical properties of abnormal tissue in a medical image;
- a detecting unit configured to detect (12) tumors in the medical image on the basis of the determined statistical properties of abnormal tissue;
- a defining unit configured to define (13) a contour for each detected tumor; and
- a displaying unit configured to display (20) findings,
**characterized by** further comprising
- a calculation unit configured to calculate (18), prior to displaying (20) findings, visualization parameters based on statistical properties of normal tissue appearing on the medical image,
- a further displaying unit configured to display (19) an image according to the visualization parameters for visual assessment, and
- an adjusting unit configured to adjust (22) sensitivity of tumor detection and instruct the system to carry out again said detecting, defining and displaying (12, 13, 20) on the basis of the adjusted sensitivity if in the displayed findings the amount of tumors appears to be lower or higher than visually assessed.

11. The system according to claim 10, **characterized in that** said visualization parameters are window size, window position, contrast level, intensity level and/or colors.

12. The system according to claim 10 or claim 11, **characterized in that** said calculation unit is adapted for taking into account the determined statistical properties of the abnormal tissue as well.

13. The system according to any of claims 10 to 12, **characterized by** comprising a registering unit configured to register (16), prior to displaying (20) findings, the medical image to a reference medical image.

14. The system according to claim 13, **characterized by** comprising an updating unit configured to update (17), after the defining (13) is completed, findings stored in the reference medical image.

## Patentansprüche

1. Verfahren zur Leberdiagnose, wobei das Verfahren die folgenden Schritte aufweist
- Bestimmen (10) statistischer Eigenschaften abnormalen Gewebes in einem medizinischen Bild;
- Erkennen (12) von Tumoren im medizinischen Bild auf der Basis der bestimmten statistischen Eigenschaften abnormalen Gewebes;
- Definieren (13) einer Kontur für jeden erkannten Tumor; und
- Anzeige (20) von Ergebnissen,
**dadurch gekennzeichnet, dass**
- vor der Anzeige (20) von Ergebnissen Visualisierungsparameter basierend auf statistischen Eigenschaften von im medizinischen Bild erscheinendem normalem Gewebe berechnet werden (18), und ein Bild gemäß den Visualisierungsparametern zur visuellen Einschätzung angezeigt wird (19); und
- die Empfindlichkeit der Tumorerkennung eingestellt (22) und das Erkennen, Definieren und Anzeigen (12, 13, 20) auf der Basis der eingestellten Empfindlichkeit erneut ausgeführt wird, wenn in den angezeigten Ergebnissen die Menge an Tumoren größer oder kleiner als visuell eingeschätzt erscheint.

2. Verfahren nach Anspruch 1, **dadurch gekennzeichnet, dass** die Visualisierungsparameter Fenstergröße, Fensterposition, Kontrastgrad, Intensitätsgrad und/oder Farben sind.

3. Verfahren nach Anspruch 1 oder 2, **dadurch gekennzeichnet, dass** die bestimmten statistischen Eigenschaften des abnormalen Gewebes auch für die Berechnung (18) berücksichtigt werden.

4. Verfahren nach einem der Ansprüche 1 bis 3, **dadurch gekennzeichnet, dass** vor der Anzeige (20) von Ergebnissen das medizinische Bild in ein medizinisches Bezugsbild eingetragen (16) und das Ergebnis dieser Eintragung verwendet wird, um die Ergebnisse zu überprüfen oder Anzeigeparameter zu bestimmen, vorzugsweise Farben der angezeigten Ergebnisse.

5. Verfahren nach Anspruch 4, **dadurch gekennzeichnet, dass** nach Beendigung des Definierens (13) die im medizinischen Bezugsbild gespeicherten Ergebnisse aktualisiert werden (17).

6. Verfahren nach Anspruch 5, **dadurch gekennzeichnet, dass**
- Ergebnisse des tatsächlichen medizinischen Bilds, die dem medizinischen Bezugsbild zugeordnet werden können;
- Ergebnisse des tatsächlichen medizinischen Bilds, die nicht dem medizinischen Bezugsbild zugeordnet werden können (z.B. neue Ergebnisse);
- Ergebnisse des medizinischen Bezugsbilds, die nicht dem tatsächlichen medizinischen Bild zugeordnet werden können (z.B. verschwundene Ergebnisse); und/oder
- Ergebnisse, die für Diagnose, Stadienbestimmung oder Überwachung ausgewählt werden,
in verschiedenen Farben angezeigt werden (20).

7. Verfahren nach einem der Ansprüche 1 bis 6, **dadurch gekennzeichnet, dass** nach der Anzeige (20) der endgültigen Ergebnisse eine interaktive Bewertung (23) positiver Ergebnisse und/oder eine interaktive Bewertung (24) negativer Ergebnisse ausgeführt wird.

8. Verfahren nach einem der Ansprüche 1 bis 7, **dadurch gekennzeichnet, dass** ein Bericht erzeugt wird, der eine Gesamttumorlast der Leber enthält.

9. Computerlesbares Medium, das ein computerlesbares Programm zur Leberdiagnose umfasst, wobei das computerlesbare Programm, wenn es auf einem Computer ausgeführt wird, den Computer veranlasst, die Schritte des Verfahrens nach einem der Ansprüche 1 bis 8 durchzuführen.

10. System zur Leberdiagnose, wobei das System umfasst
- eine Bestimmungseinheit, die konfiguriert ist, um statistische Eigenschaften abnormalen Gewebes in einem medizinischen Bild zu bestimmen (10);
- eine Erkennungseinheit, die konfiguriert ist, um Tumore im medizinischen Bild auf der Basis der bestimmten statistischen Eigenschaften abnormalen Gewebes zu erkennen (12);
- eine Definitionseinheit, die konfiguriert ist, um eine Kontur für jeden erkannten Tumor zu definieren (13); und
- eine Anzeigeeinheit, die konfiguriert ist, um Ergebnisse anzuzeigen (20),
**dadurch gekennzeichnet, dass** es weiter umfasst
- eine Recheneinheit, die konfiguriert ist, um vor der Anzeige (20) von Ergebnissen Visualisierungsparameter basierend auf statistischen Eigenschaften normalen Gewebes, das im medizinischen Bild erscheint, zu berechnen (18),
- eine weitere Anzeigeeinheit, die konfiguriert ist, um ein Bild gemäß den Visualisierungsparametern zur visuellen Einschätzung anzuzeigen (19), und
- eine Einstellungseinheit, die konfiguriert ist, um die Empfindlichkeit der Tumorerkennung einzustellen (22) und das System anzuweisen, das Erkennen, Definieren und Anzeigen (12, 13, 20) auf der Basis der eingestellten Empfindlichkeit erneut auszuführen, falls in den angezeigten Ergebnissen die Menge an Tumoren kleiner oder größer als visuell eingeschätzt erscheint.

11. System nach Anspruch 10, **dadurch gekennzeichnet, dass** die Visualisierungsparameter Fenstergröße, Fensterposition, Kontrastgrad, Intensitätsgrad und/oder Farben sind.

12. System nach Anspruch 10 oder 11, **dadurch gekennzeichnet, dass** die Recheneinheit geeignet ist, um auch die bestimmten statistischen Eigenschaften des abnormalen Gewebes zu berücksichtigen.

13. System nach einem der Ansprüche 10 bis 12, **dadurch gekennzeichnet, dass** es eine Eintragungseinheit aufweist, die konfiguriert ist, um vor der Anzeige (20) von Ergebnissen das medizinische Bild in ein medizinisches Bezugsbild einzutragen (16).

14. System nach Anspruch 13, **dadurch gekennzeichnet, dass** es eine Aktualisierungseinheit aufweist, die konfiguriert ist, um nach Beendigung der Definition (13) im medizinischen Bezugsbild gespeicherte Ergebnisse zu aktualisieren (17).

## Revendications

1. Procédé pour faire un diagnostic du foie, le procédé comprenant les étapes consistant à
- déterminer (10) des propriétés statistiques de tissus anormaux dans une image médicale ;
- détecter (12) des tumeurs dans l'image médicale en se basant sur les propriétés statistiques déterminées de tissus anormaux ;
- définir (13) un contour pour chaque tumeur détectée ; et
- afficher (20) des constatations,
**caractérisé en ce que**
- avant d'afficher (20) des constatations, on calcule des paramètres de visualisation (18) sur la base de propriétés statistiques de tissus normaux apparaissant sur l'image médicale, et une image en accord avec les paramètres de visualisation est affichée (19) pour analyse visuelle, et
- on ajuste (22) la sensibilité de la détection de tumeurs et on effectue à nouveau ladite détection, ladite définition et ledit affichage (12, 13, 20) sur la base de la sensibilité ajustée si dans les constatations affichées la quantité de tumeurs apparaît être inférieure ou supérieure à l'analyse visuelle.

2. Procédé selon la revendication 1, **caractérisé en ce que** lesdits paramètres de visualisation sont la taille de la fenêtre, la position de la fenêtre, le niveau de contraste, le niveau d'intensité et/ou des couleurs.

3. Procédé selon la revendication 1 ou 2, **caractérisé en ce que** les propriétés statistiques déterminées des tissus anormaux sont également prises en compte pour ledit calcul (18).

4. Procédé selon l'une quelconque des revendications 1 à 3, **caractérisé en ce qu'**avant l'affichage (20) des constatations, l'image médicale est mise en concordance (16) avec une image médicale de référence, et le résultat de cette mise en concordance est utilisé pour vérifier les constatations ou pour déterminer des paramètres d'affichage, de préférence les couleurs des constatations affichées.

5. Procédé selon la revendication 4, **caractérisé en ce qu'**après avoir terminé la définition (13), les constatations stockées dans l'image médicale de référence sont mises à jour (17).

6. Procédé selon la revendication 5, **caractérisé en ce que**
- des constatations de l'image médicale actuelle, qui peuvent être cartographiées par rapport à l'image médicale de référence ;
- des constatations de l'image médicale actuelle, qui ne peuvent pas être cartographiées par rapport à l'image médicale de référence (par exemple de nouvelles constatations) ;
- des constatations de l'image médicale de référence qui ne peuvent pas être cartographiées par rapport à l'image médicale actuelle (par exemple des constatations disparues) ; et/ou
- des constatations qui sont sélectionnées pour diagnostic, évaluation du stade ou surveillance
sont affichées (20) avec des couleurs différentes.

7. Procédé selon l'une quelconque des revendications 1 à 6, **caractérisé en ce qu'**après affichage (20) des constatations finales, on effectue une revue interactive (23) des constatations positives et/ou une revue interactive (24) des constatations négatives.

8. Procédé selon l'une quelconque des revendications 1 à 7, **caractérisé en ce que** l'on génère un rapport comprenant une occupation totale des tumeurs dans le foie.

9. Support lisible à l'ordinateur comprenant un programme lisible par un ordinateur pour le diagnostic du foie, dans lequel le programme lisible par un ordinateur, lorsqu'il est exécuté sur un ordinateur, amène l'ordinateur à exécuter les étapes du procédé selon l'une quelconque des revendications 1 à 8.

10. Système pour faire un diagnostic du foie, le système comprenant :
- une unité de détermination configurée pour déterminer (10) des propriétés statistiques de tissus anormaux dans une image médicale ;
- une unité de détection configurée pour détecter (12) des tumeurs dans l'image médicale en se basant sur les propriétés statistiques déterminées des tissus anormaux ;
- une unité de définition configurée pour définir (13) un contour pour chaque tumeur détectée ; et
- une unité d'affichage configurée pour afficher (20) les constatations, **caractérisé en ce qu'**il comprend en outre
- une unité de calcul configurée pour calculer (18), avant d'afficher (20) des constatations, des paramètres de visualisation basés sur des propriétés statistiques de tissus normaux apparaissant sur l'image médicale,
- une autre unité d'affichage configurée pour afficher (19) une image en accord avec les paramètres de visualisation pour analyse visuelle, et
- une unité d'ajustement configurée pour ajuster (22) la sensibilité de la détection de tumeurs et donner instruction au système d'effectuer à nouveau ladite détection, ladite définition et ledit affichage (12, 13, 20) sur la base de la sensibilité ajustée si, dans les constatations affichées, la quantité de tumeurs apparaît être inférieure ou supérieure à l'analyse visuelle.

11. Système selon la revendication 10, **caractérisé en ce que** lesdits paramètres de visualisation sont la taille de fenêtre, la position de fenêtre, le niveau de contraste, le niveau d'intensité et/ou les couleurs.

12. Système selon la revendication 10 ou 11, **caractérisé en ce que** ladite unité de calcul est adaptée à prendre en compte les propriétés statistiques déterminées des tissus anormaux également.

13. Système selon l'une quelconque des revendications 10 à 12, **caractérisé en ce qu'**il comprend une unité de mise en concordance configurée pour mettre en concordance (16), avant l'affichage (20) des constatations, l'image médicale par rapport à une image médicale de référence.

14. Système selon la revendication 13, **caractérisé en ce qu'**il comprend une unité de mise à jour configurée pour mettre à jour (17), après avoir terminé la définition (13), les constatations stockées dans l'image médicale de référence.
